# EUROPEAN PATENT APPLICATION

(11) **EP 4 756 750 A1**
(43) Date of publication of application: **10.06.2026**
(21) Application number: 25219190.3
(22) Date of filing: 27.11.2025
(51) Int. Cl.: G07C 5/08, B60R 16/023, B60W 50/02, G06Q 10/20, G07C 5/00

(54) **SYSTEMS AND METHODS FOR DETERMINING THE LIKELIHOOD OF A VEHICLE TOW**

(30) Priority: 04.12.2024 US 202463727817 P
(71) Applicant: GEOTAB Inc., Oakville, ON L6H 7V2 (CA)
(72) Inventor: Naveed, Muhammad Musa, Mississauga, L5V 1P5 (CA); Bryukhan, Vladyslav Oleksandrovic, 81245 Munich (DE); Santorelli, Michael Angelo David, Concord, L4K 3G7 (CA); Koke, Hannah Robertson, Oakville, L6H 2P9 (CA); Maida, Paul Eugene, Cambridge, N1S 3Y8 (CA)
(74) Representative: Fleuchaus & Gallo Partnerschaft mbB

(57) **Abstract**

Disclosed herein are systems and methods for determining a likelihood of a vehicle tow. An example of one such method involves operating at least one processor to: receive telematics data originating from a plurality of telematics devices installed in a plurality of vehicles; identify, using the telematics data, a diagnostic trouble code (DTC) cycle experienced by one or more of the plurality of vehicles, the DTC cycle corresponding to a reporting of a DTC during a plurality of vehicle ignition cycles; determine, for each vehicle that experienced the DTC cycle, whether a tow event occurred; determine, for each vehicle for which the tow event occurred, a vehicle downtime associated with the tow event; determine whether a termination of the DTC cycle is associated with the tow event based at least in part on when the reporting of the DTC terminates relative to the vehicle downtime; and determine the likelihood of a vehicle tow for the DTC based at least in part on a number of vehicles for which the termination of the DTC cycle is associated with the tow event.

## Description

### TECHNICAL FIELD

The present disclosure generally relates to predictive vehicle maintenance. More specifically, the present disclosure relates to determining the likelihood that a vehicle will need to be towed using telematics data.

### BACKGROUND

Today, many vehicles rely on computer-based systems (e.g., one or more processors) for their operation. As will be appreciated, such systems manage and/or produce many types of data associated with various aspects of the vehicle during the operation thereof that may generally be referred to as "telematics data". As will be described herein, telematics data may include any information, parameters, attributes, characteristics, and/or features associated with the vehicle and may be obtained therefrom using, for example, a telematics device.

Telematics data may be used for a variety of applications. For example, telematics data is often used to determine, and maintain, the operability of a vehicle. In more detail, telematics data such as, but not limited to, engine data, fluid level data, brake data, transmission data, and the like may be used to determine that a vehicle requires maintenance before the operability of the vehicle is impacted (e.g., a breakdown). As will be appreciated, vehicle breakdowns are expensive due to, for example, towing costs, component costs, labour costs, costs incurred from the non-operability of the vehicle (i.e., the vehicle downtime), etc. Such costs may be of particular concern for fleet managers, as the costs may be compounded across a fleet of hundreds or even thousands of vehicles. It is therefore desirable to avoid vehicle breakdowns wherever possible.

One conventional technique for predicting whether a vehicle may breakdown involves the use of diagnostic trouble codes (DTCs), a type of telematics data formatted as strings of letters and numbers that are generated by a vehicle (e.g., the one or more processors of the vehicle) when a potential operational issue is detected. Conventionally, any DTCs generated by a vehicle may be logged and displayed to a user (e.g., a fleet manager) to inform their maintenance decisions (e.g., to decide whether maintenance may be required to avoid a breakdown).

However, because each DTC corresponds to a single, specific issue for a specific vehicle component, vehicles are generally capable of generating thousands of different DTCs. It may therefore be difficult for a user to readily identify what specific issue the DTC relates to, as well as to distinguish between DTCs relating to major operational issues (e.g., an operational issue that, if not serviced, may lead to a breakdown) and those relating to minor operational issues (e.g., a malfunction that does not substantially affect the operability of the vehicle). As a result, it may be difficult for the user to determine whether the vehicle is actually at risk of breaking down.

A need therefore exists for improved systems and methods for predicting vehicle breakdowns.

### SUMMARY

In one aspect, the present disclosure relates to a system for determining a likelihood of a vehicle tow, the system comprising: at least one data storage operable to store telematics data originating from a plurality of telematics devices installed in a plurality of vehicles; and at least one processor in communication with the at least one data storage, the at least one processor operable to: identify, using the telematics data, a diagnostic trouble code (DTC) cycle experienced by one or more of the plurality of vehicles, the DTC cycle corresponding to a reporting of a DTC during a plurality of vehicle ignition cycles; determine, for each vehicle that experienced the DTC cycle, whether a tow event occurred; determine, for each vehicle for which the tow event occurred, a vehicle downtime associated with the tow event; determine whether a termination of the DTC cycle is associated with the tow event based at least in part on when the reporting of the DTC terminates relative to the vehicle downtime; and determine the likelihood of a vehicle tow for the DTC based at least in part on a number of vehicles for which the termination of the DTC cycle is associated with the tow event.

According to an embodiment, the at least one processor is operable to identify the DTC cycle by: identifying the DTC generated by the vehicle; determining a plurality of ignition cycles during which the DTC was reported; determining a plurality of subsequent consecutive ignition cycles during which the DTC was not reported; and identifying the DTC cycle based at least in part on the plurality of ignition cycles during which the DTC was reported and the plurality of consecutive subsequent ignition cycles during which the DTC was not reported.

According to a further embodiment, the at least one processor is further operable to identify the DTC cycle by: identifying a DTC status associated with the DTC; and identifying the DTC cycle based on the plurality of consecutive ignition cycles during which the DTC was reported, the one or more subsequent during which the DTC was not reported, and the status of the DTC.

According to a further embodiment, the status associated with the DTC indicates that the DTC is active.

According to a further embodiment, the at least one processor is operable to determine that a tow event was initiated based at least in part on the completion of an unpowered trip by the vehicle.

According to a further embodiment, the at least one processor is operable to determine that a tow event occurred based at least in part on the unpowered trip terminating at a service center.

According to a further embodiment, the at least one processor is operable to determine the vehicle downtime associated with the tow event by: determining an end time of a powered trip completed before the tow event; determining a start time of a powered trip completed after the tow event; and determining the vehicle downtime associated with the tow event based on a difference between the end time of the powered trip completed before the tow event and the start time of the powered trip completed after the tow event.

According to a further embodiment, the at least one processor is operable to determine whether the end of the DTC cycle is associated with the tow event based at least in part on the reporting of the DTC terminating during a powered trip completed prior to the tow event, during vehicle downtime prior to the tow event, during the tow event, during a maintenance event, or during a powered trip completed after the maintenance event.

According to a further embodiment, the at least one processor is operable to determine the likelihood of a vehicle tow for the DTC based on a comparison between the number of vehicles for which the termination of the DTC cycle is associated with the tow event and the number of vehicles for which the termination of the DTC cycle is not associated with the tow event.

According to a further embodiment, the at least one processor is further operable to assign a severity class to the DTC based on the likelihood of a vehicle tow therefor.

In another aspect, the present disclosure relates to a method for determining a likelihood of a vehicle tow, the method comprising operating at least one processor to: receive telematics data originating from a plurality of telematics devices installed in a plurality of vehicles; identify, using the telematics data, a diagnostic trouble code (DTC) cycle experienced by one or more of the plurality of vehicles, the DTC cycle corresponding to a reporting of a DTC during a plurality of vehicle ignition cycles; determine, for each vehicle that experienced the DTC cycle, whether a tow event occurred; determine, for each vehicle for which the tow event occurred, a vehicle downtime associated with the tow event; determine whether a termination of the DTC cycle is associated with the tow event based at least in part on when the reporting of the DTC terminates relative to the vehicle downtime; and determine the likelihood of a vehicle tow for the DTC based at least in part on a number of vehicles for which the termination of the DTC cycle is associated with the tow event.

According to an embodiment, the identifying the DTC cycle comprises operating the at least one processor to: identify the DTC generated by the vehicle; determine the plurality of ignition cycles during which the DTC was reported; determine a plurality of consecutive subsequent ignition cycles during which the DTC was not reported; and identify the DTC cycle based at least in part on the plurality of ignition cycles during which the DTC was reported and the plurality of consecutive subsequent ignition cycles during which the DTC was not reported.

According to a further embodiment, the identifying of the DTC cycle further comprises operating the at least one processor to: identify a DTC status associated with the DTC; and identify the DTC cycle based on the plurality of consecutive ignition cycles during which the DTC was reported, the one or more subsequent during which the DTC was not reported, and the status of the DTC.

According to a further embodiment, the status associated with the DTC indicates that the DTC is active.

According to a further embodiment, the determining that the tow event occurred comprises operating the at least one processor to determine that the tow event was based at least in part on the completion of an unpowered trip by the vehicle.

According to a further embodiment, the determining that the tow event occurred comprises operating the at least one processor to determine that the tow event was based at least in part on the unpowered trip terminating at a service center.

According to a further embodiment, the determining of the vehicle downtime associated with the tow event comprises operating the at least one processor to: determine an end time of a powered trip completed before the tow event; determine a start time of a powered trip completed after the tow event; and determine the vehicle downtime associated with the tow event based on a difference between the end time of the powered trip completed before the tow event and the start time of the powered trip completed after the tow event.

According to a further embodiment, the determining of whether the end of the DTC cycle is associated with the tow event based at least in part on the reporting of the DTC terminating during a powered trip completed prior to the tow event, during vehicle downtime prior to the tow event, during the tow event, during a maintenance event, or during a powered trip completed after the maintenance event.

According to a further embodiment, the determining of the likelihood of a vehicle tow for the DTC comprises operating the at least one processor to determine the likelihood of a vehicle tow based on a comparison between the number of vehicles for which the termination of the DTC cycle is associated with the tow event and the number of vehicles for which the termination of the DTC cycle is not associated with the tow event.

According to a further embodiment, the method further comprises operating the at least one processor to assign a severity class to the DTC based on the likelihood of a vehicle tow therefor.

In another aspect, the present disclosure relates to a non-transitory computer-readable medium having instructions stored thereon executable by at least one processor to implement the methods described herein.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 is a block diagram of various components interacting with an example fleet management system according to an embodiment of the present disclosure.
FIG. 2 is a block diagram of an example fleet management system interacting with an example telematics device and an example vehicle, according to an embodiment of the present disclosure.
FIG. 3 is a block diagram of an example computing device interacting with an example fleet management system, according to an embodiment of the present disclosure.
FIG. 4 is a flowchart of an example method for determining the likelihood of a vehicle tow, according to an embodiment of the present disclosure.

### DETAILED DESCRIPTION

Vehicle breakdowns are costly events that are desirable to avoid wherever possible. Vehicle breakdowns are often costly due to, for example, towing costs, component costs, labour costs, costs incurred from the non-operability of the vehicle (i.e., the vehicle downtime wherein the vehicle is not able to generate income), etc. As will be appreciated, such costs may be of particular concern for fleet managers, as the costs may be compounded across a fleet of hundreds or even thousands of vehicles.

Thus, telematics data is often used to monitor, and maintain, the operability of a vehicle. In more detail, telematics data such as, but not limited to, engine data, fluid level data, brake data, transmission data, and the like may be used to determine that a vehicle requires maintenance before the operability of the vehicle is impacted (e.g., a breakdown).

Conventional techniques may involve the use of diagnostic trouble codes (DTCs), a type of telematics data formatted as strings of letters and numbers that are generated, or reported, by a vehicle (e.g., the one or more processors of the vehicle) when a potential operational issue is detected. In such techniques, any DTCs generated by a vehicle may be logged and displayed to a user (e.g., a fleet manager) to inform their maintenance decisions (e.g., to decide whether maintenance may be required to avoid a breakdown).

However, the nature of DTCs may render them difficult to parse, interpret, and, as a result, leverage effectively. In more detail, because each DTC corresponds to a single, specific issue for a specific vehicle component, vehicles are generally capable of generating thousands of different DTCs. As well, there is not presently a standard for DTCs, so different vehicle manufacturers may use different DTCs for the same operational issue. Additionally, because each DTC is a string of numbers and letters, they are often difficult to interpret without the use of an external reference (e.g., a vehicle operational manual). For at least those reasons, it is often difficult for a user to readily identify what specific issue the DTC relates to, as well as to distinguish between DTCs relating to major operational issues (e.g., an operational issue that, if not serviced, may lead to a breakdown) and those relating to minor operational issues (e.g., a malfunction that does not substantially affect the operability of the vehicle).

It is therefore an object of the present disclosure to provided advantageous systems and methods for predicting the likelihood that a vehicle may break down.

For example, in some embodiments, the systems and methods of the present disclosure may be capable of determining a likelihood of breakdown for each DTC reported by a vehicle. In more detail, the systems and methods of the present disclosure may determine the severity of a DTC (i.e., how likely it is that a vehicle reporting that DTC will breakdown) based at least in part on the DTC being associated with a vehicle tow (i.e., a vehicle breakdown indicator). As will be appreciated, by knowing the severity of a DTC, a decision regarding the maintenance of a vehicle may be more easily made.

As well, in some embodiments, the systems and methods of the present disclosure may assign a given DTC a severity class (e.g., "low risk", "medium risk", "high risk", etc.) based on the likelihood that the DTC may lead to a tow (i.e., a break down). In such embodiments, the likelihood of breakdown of a vehicle may be readily communicable to, and understandable by, a user via the severity class.

Further, in some embodiments, the systems and methods of the present disclosure may be capable of determining a likelihood of breakdown for any type of DTC - i.e., regardless of what operational issue corresponds to the DTC, the DTC format (e.g., as decided by a vehicle manufacturer), etc. In such embodiments, it may not be necessary for a user to understand the format of the DTC, the specific operational issue that the DTC refers to, or the like in order to determine whether a vehicle requires maintenance.

Thus, by implementing the systems and methods of the present disclosure, a user (e.g., a fleet manager) may be able to more easily, and more quickly, determine whether a vehicle is at risk of a breakdown and requires service as compared to conventional techniques, which generally required the user to be familiar with DTCs and how vehicles operate in order to determine whether service is required.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

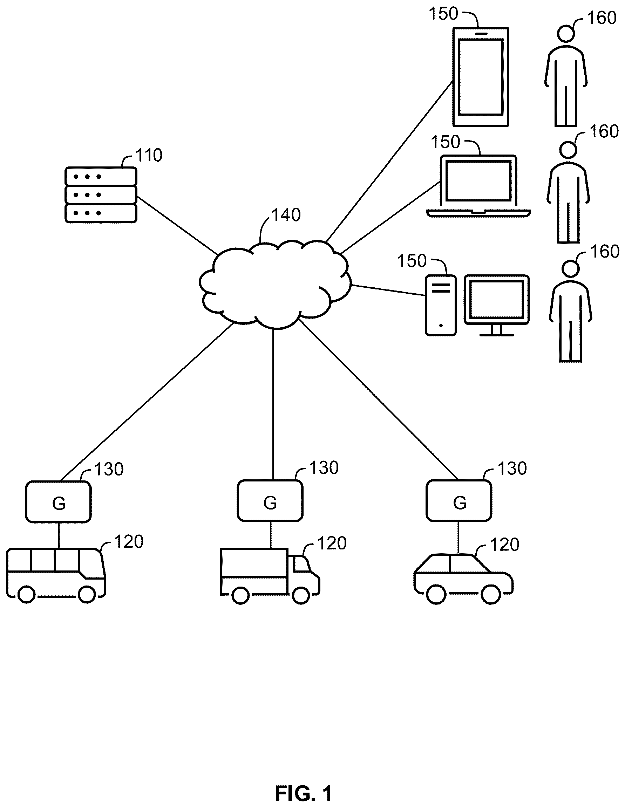

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

In some embodiments, the telematics devices 130 may be standalone devices that are removably installed in the vehicles 120 (e.g., aftermarket telematics devices). In other embodiments, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the vehicle data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

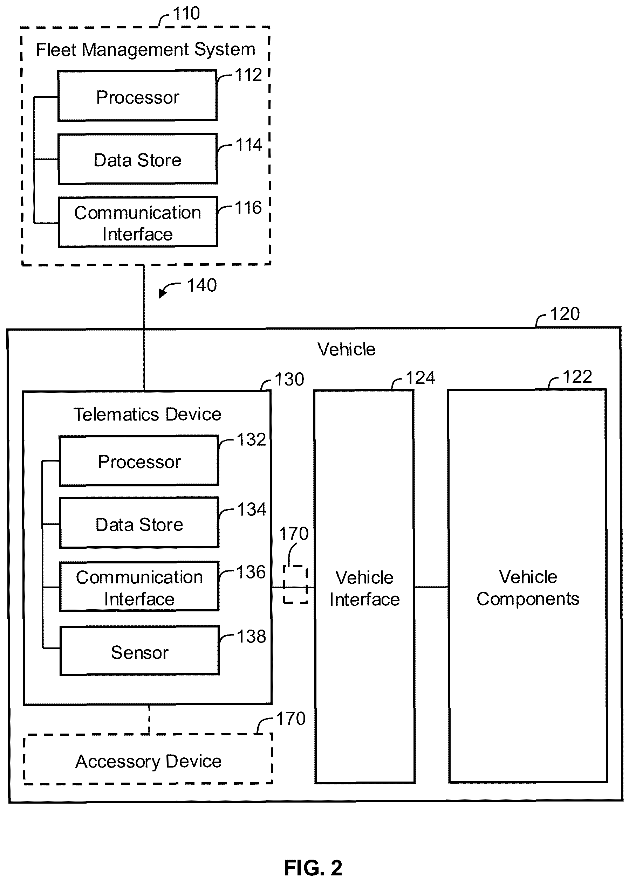

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (QPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

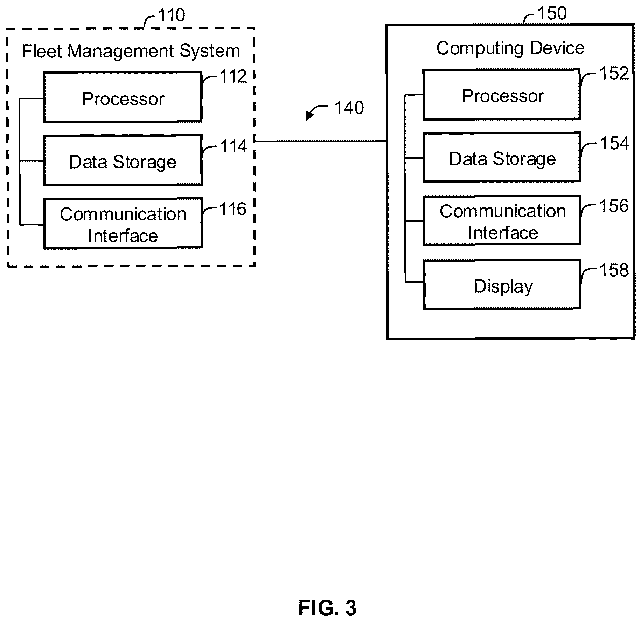

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removable connected to the computing device 150. The display 158 may display various visual representations of the telematics data.

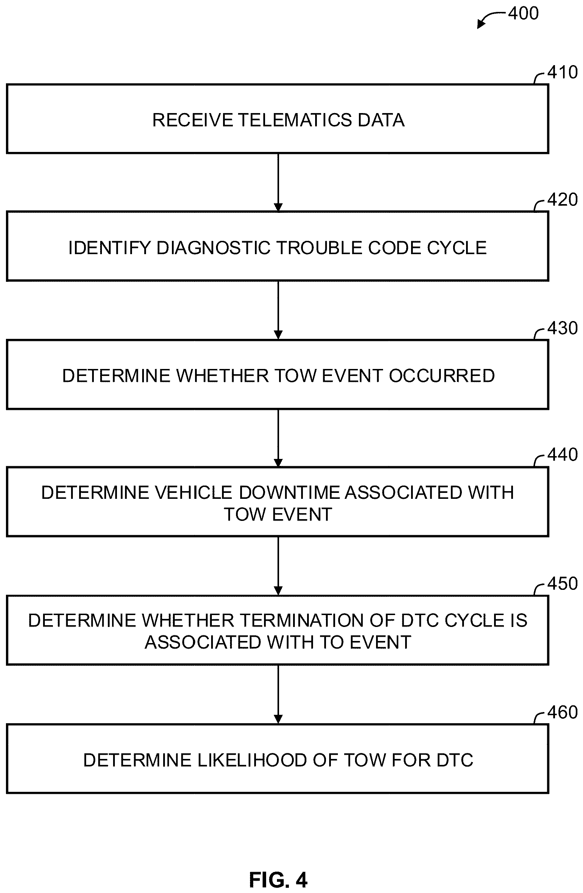

Referring now to FIG. 4, there is shown an example method for determining a likelihood of a vehicle tow (400) according to an embodiment of the present disclosure. As shown, the method 400 may comprise operating the at least one processor to: receive telematics data originating from a plurality of telematics devices installed in a plurality of vehicles (410); identify, using the telematics data, a diagnostic trouble code (DTC) cycle experienced by one or more of the plurality of vehicles, the DTC cycle corresponding to a reporting of a DTC during a plurality of vehicle ignition cycles (420); determine, for each vehicle that experienced the DTC cycle, whether a tow event occurred (430); determine, for each vehicle for which the tow event occurred, a vehicle downtime associated with the tow event (440); determine whether a termination of the DTC cycle is associated with the tow event based at least in part on when the reporting of the DTC terminates relative to the vehicle downtime (450); and determine the likelihood of a vehicle tow for the DTC based at least in part on a number of vehicles for which the termination of the DTC cycle is associated with the tow event (460).

Thus, the systems and methods of the present disclosure (e.g., the method 400) may generally involve the determination of a likelihood, or probability, that a vehicle will require a vehicle tow based on a DTC reported thereby. As will be appreciated, vehicle tows may be a vehicle breakdown indicator in that a vehicle being towed is generally a vehicle that broke down.

The method 400 may be implemented using any suitable combination of hardware and software, such as those described in reference to FIG. 1 to FIG. 3. For example, one or more operations (e.g., operations 410, 420, 430, 440, 450, and/or 460) of the method 400 may be implemented at the fleet management system (e.g., by the processor 112 executing instructions stored on the data storage 114), at the telematics device 130 (e.g., by the processor 132 executing instructions stored on the data storage 134), at the computing devices 150 (e.g., by the processor 152 executing instructions stored on the data storage 154), or a combination thereof.

At operation 410, telematics data originating from a plurality of telematics devices installed in a plurality of vehicles may be received.

In more detail, the telematics data may be obtained from the plurality of vehicles using, for example, one or more of the systems outlined in FIG. 1 to FIG. 3. For example, the telematics device 130 (e.g., the processor 132) may receive telematics data from the sensor 138, vehicle components 122, or a combination thereof. Alternatively, or additionally, the fleet management system 110 (e.g., the processor 112) may receive telematics data from the telematics device 130. Additionally, or alternatively, the computing device 150 (e.g., the processor 152) may receive telematics data from the telematics device 130 and/or the fleet management system 110. Additionally, or alternatively, the telematics device 130, the fleet management system 110, and/or the computing device 150 may receive telematics data from one or more data storages (e.g., one or more of the data storages 114, 134, 154).

As described herein, a DTC generated, or reported, by a vehicle may be used to determine the likelihood that the vehicle will require a tow (e.g., due to a breakdown). Thus, the telematics data will generally comprise DTC data (e.g., as a portion of all error/diagnostic data). As well, as will be described in detail below, the systems and methods of the present disclosure may also involve determining whether a vehicle had to initiate a tow event, determining whether vehicle downtime was associated with the tow event, and/or whether the vehicle visited a service center. The telematics data may therefore also generally comprise geospatial data (e.g., location data), engine data (e.g., engine RPM data, ignition data, engine road speed data, etc.), odometer data (e.g., odometer values), telematics device data (e.g., telematics device status data), and the like.

In some embodiments, the telematics data may be preprocessed prior to and/or subsequently to being received. For example, the telematics data may be received in one or more various formats, standards, or protocols. In some cases, it may be beneficial to reformat the telematics data prior to use in the systems and methods of the present disclosure. As a further example, the telematics data may include datapoints reported at irregular frequencies and/or that correspond to mismatched points in time. In such cases, the telematics data may be interpolated so that the datapoints in each time series correspond to successive and/or equally spaced points in time. As a yet further example, and as will be described herein, the telematics data may be curve-logged telematics data, which may result in a reduced number of received datapoints. In such implementations, the reduced number of datapoints may be interpolated to provide a fulsome dataset.

At operation 420 of the method 400, a DTC cycle experienced by one or more of the plurality of vehicles may be identified. As used herein, a "DTC cycle" may generally refer to a reporting, or generating, of a particular DTC by a vehicle during a plurality of vehicle ignition cycles. For example, the start of the DTC cycle may correspond to the start of the first ignition cycle during which the DTC was reported and the end of the DTC cycle may correspond to the end of the final ignition cycle during which the DTC was reported.

In some embodiments, the DTC may be reported during a plurality of consecutive ignition cycles. However, it may sometimes be the case that a DTC is reported during a plurality of non-consecutive ignition cycles due to, for example, the movement of the vehicle during normal operation affecting one or more sensors thereof. Thus, it may be useful to identify the DTC cycle based, as well, on a number of ignition cycles during which the vehicle does not report the DTC. For example, in some embodiments, the identifying the DTC cycle comprises operating the at least one processor to: identify the DTC generated by the vehicle; determine the plurality of ignition cycles during which the DTC was reported; determine a plurality of consecutive subsequent ignition cycles during which the DTC was not reported; and identify the DTC cycle based at least in part on the plurality of ignition cycles during which the DTC was reported and the plurality of consecutive subsequent ignition cycles during which the DTC was not reported. In such embodiments, by determining a plurality of consecutive ignition cycles that occur subsequent to the plurality of ignition cycles during which the DTC was reported, it may be more accurately confirmed that the DTC cycle terminated (i.e., that the DTC was erroneously not reported during an ignition cycle).

The inventors of the present disclosure surprisingly found that the use of DTC cycles to determine the likelihood of a vehicle tow, rather than, for example, a DTC reported during a single ignition cycle, may reduce the likelihood of a "false positive", where a DTC was erroneously reported by the vehicle (i.e., conversely to the above-described scenario). As a result, the DTC cycle may be more accurately associated with a tow event (i.e., a breakdown indicator), which, in turn, may provide greater overall accuracy with respect to the likelihood of a vehicle tow.

As described herein, the DTC of the DTC cycle may be any type of DTC (e.g., pertaining to any type of vehicle operational issue) generated by any make of vehicle - i.e., irrespective of the formatting of the DTC implemented by the vehicle manufacturer. In some embodiments, the DTC of the DTC cycle may have a status associated therewith. In more detail, DTCs may have associated therewith a status indicating their activity. For example, the DTC may be associated with a status such as "pending", "active", "confirmed", etc. In that example, the "pending" status may generally refer to a newly generated DTC (e.g., has only existed for a single ignition cycle), the "active" status may generally refer to a DTC that has been repeatedly generated (e.g., for a plurality of consecutive ignition cycles), and the "confirmed" status may refer to a DTC that was "active" but no longer is (e.g., due to reasons unrelated to a maintenance event).

It may in some cases be useful to identify a DTC cycle taking into account the status of the DTC reported during the plurality of ignition cycles. For example, a DTC cycle for a "confirmed" (i.e., previously active) DTC may not be particularly useful for, for example, determining whether a tow event is associated therewith. Thus, in some embodiments, the identifying of the DTC cycle 420 may further comprise operating the at least one processor to: identify a DTC status associated with the DTC; and identify the DTC cycle based on the plurality of consecutive ignition cycles during which the DTC was reported, the one or more subsequent during which the DTC was not reported, and the status of the DTC. In a further embodiment, the status associated with the DTC may indicate that the DTC is active.

Referring now to operation 430 of the method 400, it may be determined, for each vehicle that experienced the DTC cycle, whether a tow event occurred. As used herein, the term "tow event" may generally refer to a vehicle tow, or a towing of given vehicle by another vehicle (e.g., a tow truck). As described herein, the occurrence of a tow event may indicate that the vehicle broke down.

The determination that a tow event occurred may be performed using any suitable technique. For example, in some embodiments, the determining, for each vehicle that experienced the DTC cycle, whether the tow event occurred may be based at least in part on the completion of an unpowered trip by the vehicle. As used herein, an "unpowered trip" may generally refer to a vehicle that changes locations without engaging the engine thereof (e.g., the ignition is not engaged, there is no change in engine RPM, there is no change in engine road speed, there is no change in odometer values, etc.). As will be appreciated, the completion of such an unpowered trip may indicate that the vehicle was towed.

However, there may in some cases be reasons other than a tow event that may cause a vehicle to complete an unpowered trip. In such cases, it may be useful to further identify whether the unpowered trip was a tow event.

For example, in some embodiments, the determination that a tow occurred may further comprise operating the at least one processor to input into at least one machine learning model (e.g., a random forest model, a gradient boosting model, etc.) telematics data related to, or obtained during, the unpowered trip. Examples of suitable telematics data for input into the machine learning model may include, but are not limited to, a difference in odometer values after the unpowered trip, a total time of the unpowered trip, a total distance of the unpowered trip, an ignition status during the unpowered trip, a geographical distance between a start point and an endpoint of the unpowered trip, telematics device debug logs obtained during the unpowered trip, a CAN Bus error detected during the unpowered trip, the installation status of the telematics device after the unpowered trip, a CAN Bus error detected after the unpowered trip, a maximum speed of the vehicle during the unpowered trip, an RPM value before the unpowered trip, an RPM value after the unpowered trip, a transmission gear value during the unpowered trip, a telematics device status during the unpowered trip, a fault code detected during the unpowered trip, a fault code detected after the unpowered trip, or a combination thereof.

In an additional embodiment, the determination that a tow event occur may further comprise operating the at least one processor to determine whether the unpowered trip ended at least proximate (e.g., within 500m) to a service center zone. As used herein, the term "service center zone" may generally refer to an area, or zone, within which a service center is located and may be identified using, for example, map data provided by a map information provider such as OpenStreetMaps (OSM).

However, in some cases, service center zones may not be indicated in map data. In such cases, it may instead be useful to identify service center zones using the telematics data obtained from the plurality of telematics devices installed in the plurality of vehicles. For example, in some embodiments, a service center zone may be identified by operating the at least one processor to: determine, for each of the vehicles that completed an unpowered trip when a vehicle maintenance event has occurred by identifying at least a binary vehicle status indicator change, time-logged telematics data that meets a predetermined condition, an indication that a vehicle diagnosis has occurred, or a combination thereof; determine, using the telematics data, a location of each of the plurality of vehicles at a time at which the vehicle maintenance event occurred; and identify one or more service centers by: applying to a plurality of maintenance event locations a clustering model, and classifying one or more clusters of maintenance event locations as a service center zone. In such embodiments, the binary vehicle status indicator change may comprise a change in vehicle warning lights, a change in DTCs, or a combination thereof; the time-logged telematics data may comprise engine oil quality data, battery data, fluid level data, or a combination thereof; the predetermined condition may comprise an increase in engine oil quality and/or a fluid level that is greater than a predetermined threshold; and the indication that the vehicle diagnosis has occurred may comprise an indication that a diagnostic tool has communicated with a vehicle interface.

Referring now to operation 440 of the method 400, for each vehicle for which the tow event occurred, a vehicle downtime associated therewith may be determined. As used herein, the term "vehicle downtime" may generally refer to a period of time during which a vehicle is non-operable (e.g., due to being serviced). As will be described herein, the vehicle downtime may be used when determining whether a termination of a DTC cycle is associated with the tow event.

Vehicle downtime associated with the tow event may be determined using any suitable technique. For example, in some embodiments, the determining of whether the vehicle downtime is associated with the tow event may comprise operating the at least one processor to: determine an end time of a powered trip completed before the tow event; determine a start time of a powered trip completed after the tow event; and determining whether the vehicle downtime is associated with the tow event based on a difference between the end time of the powered trip completed before the tow event and the start time of the powered trip completed after the tow event. In such embodiments, the powered trip completed before the tow event and the powered trip completed after the tow event may have been completed immediately before the tow event and immediately after the tow event, respectively.

At operation 450 of the method 400, it may be determined whether a termination of the DTC cycle is associated with the tow event. The association of the termination of the DTC cycle and the tow event may be based at least in part on when the reporting of the DTC terminates relative to the vehicle downtime. In more detail, in the context of the present disclosure, if a DTC cycle terminates during the vehicle downtime, or during one of the powered trips defining the bounds of the vehicle downtime, the termination of the DTC cycle may be considered to be associated with the tow event.

The inventors surprisingly found that, while many DTC cycles associated with tow events terminate during a maintenance event (e.g., vehicle maintenance performed at a service center), many DTC cycles that are associated with tow events end before the tow event, after the maintenance event, etc. Thus, in order to accurately determine whether an end of a DTC cycle is associated with a tow event, it may be useful to associate the DTC cycle to a tow event based on the vehicle downtime associated with the tow event - e.g., during the vehicle downtime, or during one of the powered trips used to determine the vehicle downtime.

In some embodiments, it may be useful to classify a phase of the vehicle downtime during which the DTC cycle ends. Such embodiments may be useful for certain downstream applications, providing more information to a user, etc. For example, the determining of whether the termiantion of the DTC cycle is associated with the tow event may be based at least in part on the reporting of the DTC terminating during a powered trip completed prior to the tow event, during vehicle downtime prior to the tow event, during the tow event, during a maintenance event, or during a powered trip completed after the maintenance event. As described herein, the powered trips completed prior to and after the tow event may be the same as those used to determine the vehicle downtime. As also indicated herein, the maintenance event may be, for example, any type of vehicle servicing (e.g., repairs, bodywork, general maintenance, etc.). In some embodiments, the DTC cycle may be determined to have terminated during the maintenance event if the DTC cycle terminates during a period after the tow event and before the powered trip completed after the tow event, if geospatial data indicates that the vehicle experiencing the DTC cycle is at a service center when the DTC cycle terminates, or a combination thereof.

Referring to operation 460 of the method 400, it is shown that the likelihood of a vehicle tow for the DTC may be determined based at least in part on an amount of vehicles for which the end of the DTC cycle is associated with the tow event. Thus, as described herein, the likelihood that a given DTC may lead to a vehicle tow may be determined. As also described herein, the likelihood of a tow may correspond to the likelihood of a breakdown, as vehicle tows may most commonly occur for vehicles that have broken down.

As indicated above, the determining of the likelihood of a vehicle tow for the DTC may be based at least in part on the amount of vehicles for which the termination of the DTC cycle is associated with the tow event. That is, if a DTC cycle experienced by a vehicle terminates during the vehicle downtime, or during one of the powered trips completed before of after the vehicle downtime, the vehicle may be considered when determining the likelihood that the DTC leads to a vehicle tow.

The determining of the likelihood of a vehicle tow for the DTC may be performed using any suitable technique. For example, in some embodiments, the determining of the likelihood of a vehicle tow for the DTC may be based on a comparison between the number of vehicles for which the end of the DTC cycle is associated with the tow event and the number of vehicles for which the end of the DTC cycle is not associated with the tow event. In such embodiments, the number of vehicles that experienced the DTC cycle but did not have a termination of the DTC cycle associated with a tow event (e.g., vehicles that do not satisfy the operations 430, 440, and/or 450) may be compared to the number of vehicles that did have a termination of the DTC cycle associated with a tow event. In some embodiments, a Bernoulli distribution may be used to determine a probability (i.e., likelihood) that a DTC leads to a tow event. In such embodiments, the number of vehicles for which the termination of the DTC cycle was associated with a tow event may be measured against the number of vehicles for which the termination of the DTC cycle was not associated with a tow event, and a probability that the DTC of the DTC cycle will lead to a tow may be determined therefrom (e.g., based on the total number of vehicles, etc.)

Further, it may in some cases be useful to classify each DTC for which a likelihood of a vehicle tow is determined based on the determined likelihood. As described herein, conventional techniques often require a user (e.g., a fleet manager) to understand what each issue each DTC corresponds to as well as the severity of that issue. By classifying each DTC for which a likelihood of a vehicle tow is determined based on the determined likelihood, a user may easily determine themselves whether a reported DTC requires, for example, immediate attention to avoid a breakdown. For example, in some embodiments, the at least one processor may be operated to assign a severity class based on the likelihood of a vehicle tow for the DTC. The "severity class" may be any type of identifier that indicates the likelihood that the DTC leads to a tow event and may be assigned based on how likely it is that the DTC leads to a tow event. For example, a DTC may be assigned a severity class such as "low" if there is relatively low likelihood of leading to a tow event (e.g., a probability of 0% to 5%), "medium" if there is a moderate likelihood of leading to a tow event (e.g., a probability of 5% to 10%), "high" if there is a relatively high likelihood of leading to a tow event (e.g., a probability of 10% to 15%), and "critical" if there is a very high likelihood of leading to a tow (e.g., any probability above 15%). Of course, other severity classes, probability ranges, etc. may be used if so desired.

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are dis-cussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for determining a likelihood of a vehicle tow, the system comprising:
at least one data storage operable to store telematics data originating from a plurality of telematics devices installed in a plurality of vehicles; and
at least one processor in communication with the at least one data storage, the at least one processor operable to:
identify, using the telematics data, a diagnostic trouble code (DTC) cycle experienced by one or more of the plurality of vehicles, the DTC cycle corresponding to a reporting of a DTC during a plurality of vehicle ignition cycles;
determine, for each vehicle that experienced the DTC cycle, whether a tow event occurred;
determine, for each vehicle for which the tow event occurred, a vehicle downtime associated with the tow event;
determine whether a termination of the DTC cycle is associated with the tow event based at least in part on when the reporting of the DTC terminates relative to the vehicle downtime; and
determine the likelihood of a vehicle tow for the DTC based at least in part on a number of vehicles for which the termination of the DTC cycle is associated with the tow event.

2. The system of claim 1, wherein the at least one processor is operable to identify the DTC cycle by:
identifying the DTC generated by the vehicle;
determining a plurality of ignition cycles during which the DTC was reported;
determining a plurality of subsequent consecutive ignition cycles during which the DTC was not reported; and
identifying the DTC cycle based at least in part on the plurality of ignition cycles during which the DTC was reported and the plurality of consecutive subsequent ignition cycles during which the DTC was not reported.

3. The system of claim 2, wherein the at least one processor is further operable to identify the DTC cycle by:
identifying a DTC status associated with the DTC; and
identifying the **DTC** cycle based on the plurality of consecutive ignition cycles during which the **DTC** was reported, the one or more subsequent during which the **DTC** was not reported, and the status of the DTC.

4. **The** system of any one of claims 1 to 3, wherein the at least one processor is operable to determine that a tow event was initiated based at least in part on the completion of an unpowered trip by the vehicle.

5. **The** system of any one of claims 1 to 4, wherein the at least one processor is operable to determine the vehicle downtime associated with the tow event by:
determining an end time of a powered trip completed before the tow event;
determining a start time of a powered trip completed after the tow event; and
determining the vehicle downtime associated with the tow event based on a difference between the end time of the powered trip completed before the tow event and the start time of the powered trip completed after the tow event.

6. The system of any one of claims 1 to 5, wherein the at least one processor is operable to determine whether the end of the DTC cycle is associated with the tow event based at least in part on the reporting of the DTC terminating during a powered trip completed prior to the tow event, during vehicle downtime prior to the tow event, during the tow event, during a maintenance event, or during a powered trip completed after the maintenance event.

7. The system of any one of claims 1 to 6, wherein the at least one processor is operable to determine the likelihood of a vehicle tow for the DTC based on a comparison between the number of vehicles for which the termination of the DTC cycle is associated with the tow event and the number of vehicles for which the termination of the DTC cycle is not associated with the tow event.

8. A method for determining a likelihood of a vehicle tow, the method comprising operating at least one processor to:
receive telematics data originating from a plurality of telematics devices installed in a plurality of vehicles;
identify, using the telematics data, a diagnostic trouble code (DTC) cycle experienced by one or more of the plurality of vehicles, the DTC cycle corresponding to a reporting of a DTC during a plurality of vehicle ignition cycles;
determine, for each vehicle that experienced the DTC cycle, whether a tow event occurred;
determine, for each vehicle for which the tow event occurred, a vehicle downtime associated with the tow event;
determine whether a termination of the DTC cycle is associated with the tow event based at least in part on when the reporting of the DTC terminates relative to the vehicle downtime; and
determine the likelihood of a vehicle tow for the DTC based at least in part on a number of vehicles for which the termination of the DTC cycle is associated with the tow event.

9. The method of claim 8, wherein the identifying the DTC cycle comprises operating the at least one processor to:
identify the DTC generated by the vehicle;
determine the plurality of ignition cycles during which the DTC was reported;
determine a plurality of consecutive subsequent ignition cycles during which the DTC was not reported; and
identify the DTC cycle based at least in part on the plurality of ignition cycles during which the DTC was reported and the plurality of consecutive subsequent ignition cycles during which the DTC was not reported.

10. The method of claim 9, wherein the identifying of the DTC cycle further comprises operating the at least one processor to:
identify a DTC status associated with the DTC; and
identify the DTC cycle based on the plurality of consecutive ignition cycles during which the DTC was reported, the one or more subsequent during which the DTC was not reported, and the status of the DTC.

11. The method of any one of claims 8 to 10, wherein the determining that the tow event occurred comprises operating the at least one processor to determine that the tow event was based at least in part on the completion of an unpowered trip by the vehicle.

12. The system of any one of claims 8 to 11, wherein the determining of the vehicle downtime associated with the tow event comprises operating the at least one processor to:
determine an end time of a powered trip completed before the tow event;
determine a start time of a powered trip completed after the tow event; and
determine the vehicle downtime associated with the tow event based on a difference between the end time of the powered trip completed before the tow event and the start time of the powered trip completed after the tow event.

13. The method of any one of claims 8 to 12, the determining of whether the end of the DTC cycle is associated with the tow event based at least in part on the reporting of the DTC terminating during a powered trip completed prior to the tow event, during vehicle downtime prior to the tow event, during the tow event, during a maintenance event, or during a powered trip completed after the maintenance event.

14. The method of any one of claims 8 to 13, wherein the determining of the likelihood of a vehicle tow for the DTC comprises operating the at least one processor to determine the likelihood of a vehicle tow based on a comparison between the number of vehicles for which the termination of the DTC cycle is associated with the tow event and the number of vehicles for which the termination of the DTC cycle is not associated with the tow event.

15. A non-transitory computer-readable medium having instructions stored thereon executable by at least one processor to implement the method of any one of claims 8 to 14.
